# EUROPEAN PATENT SPECIFICATION

(11) **EP 2 432 047 B1**
(45) Date of publication and mention of the grant of the patent: **25.12.2013**
(21) Application number: 11181480.2
(22) Date of filing: 15.09.2011
(51) Int. Cl.: H01M 2/10, B60K 1/04, B60K 1/00

(54) **Battery pack and electrically powered vehicle provided with same**
Batteriepack und damit elektrisch angetriebenes Fahrzeug
Bloc-batterie et véhicule électrique fourni avec celui-ci

(30) Priority: 16.09.2010 JP 2010207962
(43) Date of publication of application: 21.03.2012
(73) Proprietor: Lithium Energy Japan, Minami-ku Kyoto-shi Kyoto 601-8520 (JP)
(72) Inventor: Yoshioka, Toshiki, Ritto-shi Shiga, 520-3021 (JP); Kusunoki, Toshiki, Ritto-shi Shiga, 520-3021 (JP)
(74) Representative: Vossius & Partner

(56) References cited:
- EP-A1- 2 525 426
- JP-A- 2003 297 306
- US-A- 5 620 057
- US-A1- 2010 136 402

## Description

The present invention relates to a battery pack mounted on a hybrid electric vehicle (HEV) or an electric vehicle (EV). The present invention also relates to an electrically powered vehicle provided with this battery pack.

In recent years, from the viewpoint of environmental protection, a hybrid electric vehicle with small CO₂ emissions and an electric vehicle that does not emit CO₂ (hereinafter collectively referred to as an electrically powered vehicle) have come into widespread use. A battery pack is mounted on this electrically powered vehicle as an energy supply source that supplies energy to a driving motor and other electric systems.

The battery pack is provided with a plurality of cell modules and a packaging case housing the plurality of cell modules.

Each of the cell modules is such that a plurality of electric cells are electrically connected as one package. That is, each of the cell modules is an assembled battery formed of a plurality of electric cells.

The packaging case is provided with a tray on which cell modules are arranged and a cover that covers the cell modules on the tray. The tray is provided with a lower flange portion. The cover is provided with an upper flange portion that abuts the lower flange portion.

More specifically, the tray is provided with a bottom portion on which a plurality of cell modules are arranged in a matrix shape in planar view (in a condition in which a plurality of cell modules are arrayed lengthwise and crosswise in planar view), a lower circumferential wall portion that rises from the outer circumference of the bottom portion, and the above-described lower flange portion that extends outward from the upper end of the lower circumferential wall portion. The cover is provided with a top portion having a shape corresponding to an open portion of the tray, an upper circumferential wall portion that suspends from the outer circumference of the top portion, and the above-described upper flange portion that extends outward from the lower end of the upper circumferential wall portion.

As a result of this, when the cell modules on the tray are covered with the cover, the lower flange portion and the upper flange portion abut each other and the tray (the bottom portion and the lower circumferential wall portion) and the cover (the top portion and the upper circumferential wall portion) together form an internal space that houses the cell modules.

This battery pack is mounted to a bottom portion of an electrically powered vehicle. That is, because the weight and size of the whole battery pack mounted on an electrically powered vehicle becomes very large due to the necessity of securing electrical capacity, from the viewpoints of driving stability, arrangement of other components and the like, this battery pack is arranged in the bottom portion of an electrically powered vehicle (cf., JP-A- 2007-253933, for example).

As described above, the cell modules are arranged in the internal space of the packaging case. Because the cell modules provide the supply source of electric energy, the entry of liquids, such as water, into the internal space is strictly prohibited from the standpoints of electric shock, leak and the like.

For this reason, in a battery pack mounted to the bottom portion of an electrically powered vehicle, it is necessary that the area between the tray and the cover be sealed in preparation for the adherence of moisture to the outer surface of the packaging case due to the splashing of water during car washing and traveling. Therefore, a battery pack is assembled by covering the tray with a cover after the arrangement (for example, application) of a sealing member on the lower flange portion of the tray.

As a result of this, the interface between the lower flange portion of the tray and the upper flange portion of the cover is filled with a sealing agent. For this reason, liquids such as water adhering to the packaging case are prevented from flowing into the internal space between the lower flange portion of the tray and the upper flange portion of the cover. The tray and the cover are fastened together by inserting male screw members (for example, bolts) into appropriate portions of the lower flange portion and upper flange portion that abut each other and screwing a nut on each of the male screw members.

However, in the above-described battery pack, with the lower flange portion and the upper flange portion abutting each other, the sealing agent interposed between the lower flange portion and the upper flange portion may sometimes leak to the inside and outside. For this reason, in the above-described battery pack, in some cases it is impossible to ensure reliable sealing between the lower flange portion and the upper flange portion (it is impossible to produce a liquid-tight condition).

That is, in the above-described battery pack, with the lower flange portion and the upper flange portion abutting each other, the load of the cover acts on the lower flange portion via the upper flange portion. For this reason, in the above-described battery pack, the sealing agent arranged on the lower flange portion may sometimes be pushed out to the inside and outside. If this occurs, a sealing agent is not sufficiently present between the lower flange portion and the upper flange portion and hence it may sometimes be impossible to obtain necessary sealing performance.

In particular, as described above, in the case where the lower flange portion and the upper flange portion are fastened together by screwing nuts on male screw members inserted into the lower flange portion and the upper flange portion held in abutment with each other, the tightening force of the male screw members in the direction of axis line acts on the lower flange portion and the upper flange portion. For this reason, the phenomenon that the sealing member interposed between the lower flange portion and the upper flange portion is pushed out to the inside and outside becomes remarkable.

US-A-2010/0136402 describes a sealed battery pack to extend the life of the batteries contained therein.

An object of the present invention is to provide a battery pack that ensures sufficient sealing performance between a tray and a cover by arranging a necessary sealing member between a lower flange portion of the tray and an upper flange portion of the cover that are held in abutment with each other and to provide an electrically powered vehicle provided with this battery pack..

A battery pack according to the present invention includes:
one or more electric cells; and
a packaging case that houses the one or more electric cells;
the packaging case including:
   a tray on which the electric cells are arranged, the tray having a lower flange portion; and
   a cover that covers the electric cells on the tray, the cover having an upper flange portion; wherein
   the lower flange portion and the upper flange portion have facing surfaces respectively, through which the lower and upper flange portions abut each other with the electric cells on the tray covered with the cover; and
   at least a part of the facing surfaces of at least one of the lower flange portion and the upper flange portion forms a non-abutting portion, the non-abutting portion being located apart from the facing surface of the opposite flange portion with the lower flange portion and the upper flange portion abutting each other;
the battery pack further comprising a sealing member arranged on the non-abutting portion.

As used herein, "a sealing member" refers to a liquid sealing agent having viscosity and a sealing material in the form of a sheet (in the form of tape).

The non-abutting portion is inclined to be located apart from the facing surface of the opposite flange portion toward an internal space of the packaging case in which the electric cells are housed; and
the non-abutting portion and the facing surface of the opposite flange portion together form an expanded gap that expands toward the internal space and is open to the internal space.

It is preferred that at least one of the tray and the cover includes a blocking body that blocks an opening of the expanded gap.

In this case, the expanded gap may have a triangular shape in section defined by the non-abutting portion, the surface of the opposite flange portion and the blocking body.

In this case, the sealing member may be arranged to fill the expanded gap.

In another embodiment of the present invention, it is preferred that the battery pack further includes an edge cover that covers from outside the whole circumference or substantially the whole circumference of the lower flange portion and the upper flange portion that abut each other.

In this case, it is preferred that the edge cover comprises:
a first section facing the lower flange portion;
a second section facing the upper flange portion; and
a connecting portion that connects base ends of the first section and the second section together, wherein
one of the first section and the second section has a plurality of female threaded portions; and
the residual one of the first section and the second section, the lower flange portion, and the upper flange portion have screw insertion holes arranged corresponding to the arrangement of the female threaded portions, through which male screw members are inserted.

In still another embodiment of the present invention, it is preferred that nuts are fixed onto an outer surface of one of the first section and the second section, the outer surface being located opposite to the surface facing one of the lower flange portion and the upper flange portion, the nuts have threaded holes, and the threaded holes constitute the female threaded portions.

In yet another embodiment of the present invention, it is preferred that the plurality of female threaded portions of one of the first section and the second section are closed at one ends thereof located on the opposite side to the surface facing one of the lower flange portion and the upper flange portion.

In another embodiment of the present invention, it is preferred that the non-abutting portion is formed at a place nearer to the internal space than the screw insertion holes in such a manner as to avoid the screw insertion holes.

In a further concrete embodiment of the present invention, the packaging case may be configured to be capable of being mounted to a bottom portion of an electrically powered vehicle or may be mounted thereto.

In still another embodiment of the present invention, it is preferred that the lower flange portion and the upper flange portion form the shape of an endless annulus respectively; and
the non-abutting portion is formed along the whole circumference of the at least one of the lower flange portion and the upper flange portion.

Furthermore, the electrically powered vehicle of the present invention is provided with any one of the above-described battery packs.

### BRIEF DESCRIPTION OF THE DRAWINGS

FIG. 1 is a general perspective view of a battery pack according to an embodiment of the present invention;
FIG. 2 is a general plan view of the battery pack of this embodiment;
FIG. 3 is an exploded perspective view of the battery pack of this embodiment in which a cooling fan is not shown;

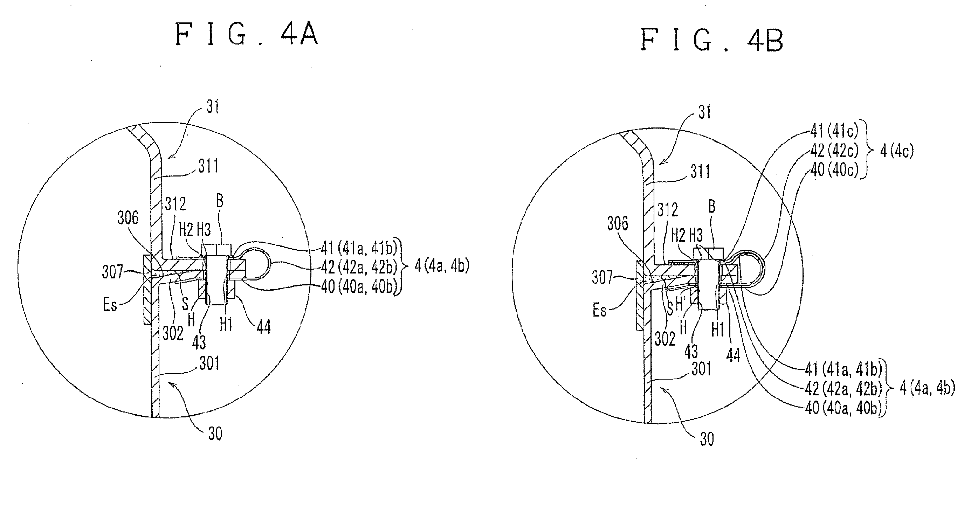

FIGS. 4A and 4B are partial enlarged sectional views of the battery pack of this embodiment; FIG. 4A showing an enlarged sectional view of the area of a lower flange portion and an upper flange portion held in abutment with each other which is covered with an edge cover (only a first separate piece or a second separate piece), and FIG. 4B showing an enlarged sectional view of the area of an edge cover (a first separate piece or a second separate piece) covering a lower flange portion and an upper flange portion that abut each other, on which another edge cover (a third separate piece) is placed;

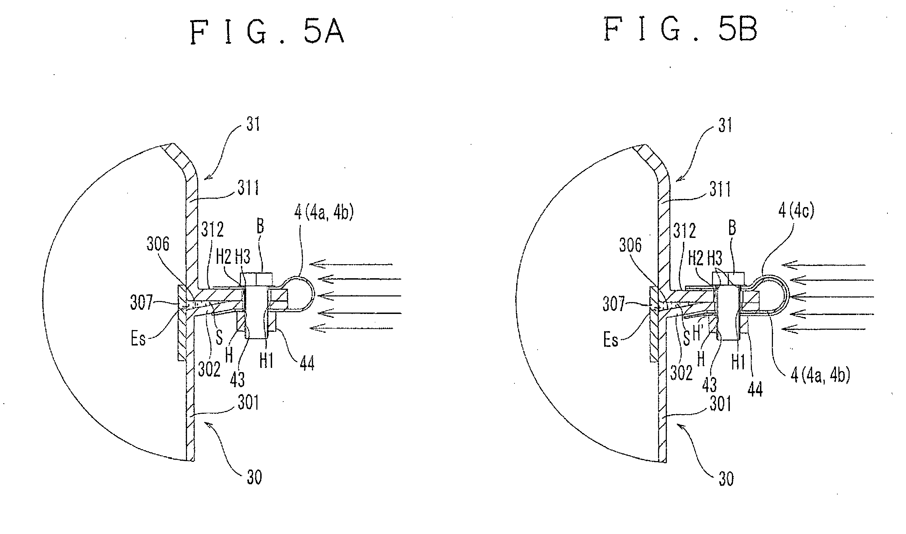

FIGS. 5A and 5B are explanatory sectional views related to the liquid-tightness of the battery pack of this embodiment; FIG. 5A showing how the area of a lower flange portion and an upper flange portion that abut each other, which is covered with an edge cover (only a first separate piece or a second separate piece), is being sprayed with a high-pressure liquid (a cleaning liquid), and FIG. 5B showing how the area of an edge cover (a first separate piece or a second separate piece) covering a lower flange portion and an upper flange portion that abut each other, on which another edge cover (a third separate piece) is placed, is being sprayed with a high-pressure liquid (a cleaning liquid); and
FIG. 6A is a partial enlarged sectional view of the battery pack in another embodiment of the present invention; FIG. 6A showing a partial enlarged view of a battery pack whose lower flange portion and upper flange portion that abut each other are exposed to the outside, and FIG. 6B showing a partial enlarged view of a battery pack in which a surface on the far side of a concavity forms a non-abutting portion in part of a lower flange portion that abuts an upper flange portion.

### DETAILED DESCRIPTION OF THE PREFERRED EMBODIMENTS

Hereinafter a battery pack of an embodiment of the present invention will be described with reference to the accompanying drawings.

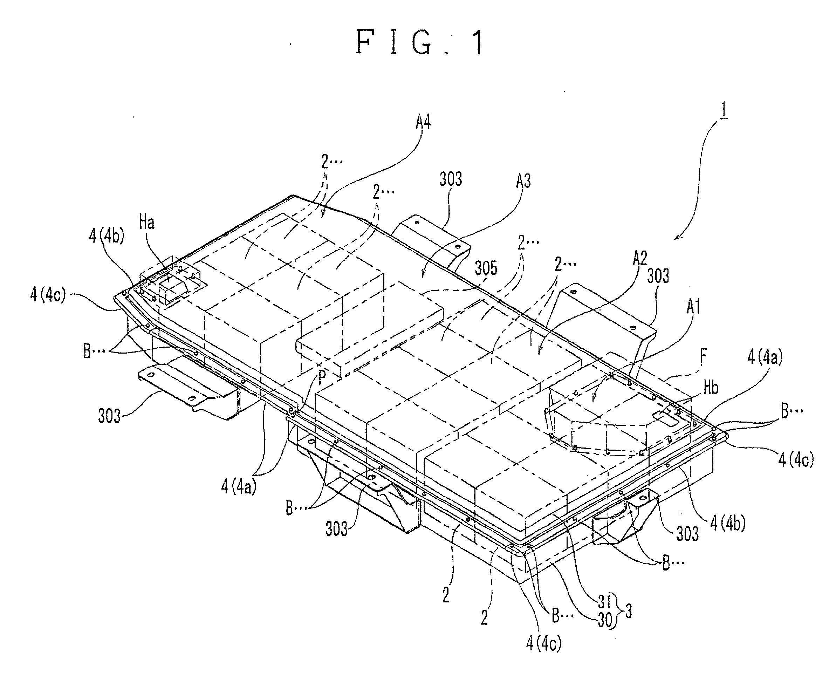

The battery pack 1 is intended to be mounted on an electric vehicle (EV) which is an electrically powered vehicle, and as shown in FIGS. 1. to 3, the battery pack 1 is provided with a plurality of cell modules 2, ... and a packaging case 3 that houses the cell modules 2, .... In each of the drawings, the cell modules 2, ... are simplified and indicated by alternate long and two short dashes lines.

Each of the cell modules 2, ... is what is called an assembled battery in which a plurality of electric cells are arranged in a line and packaged. In each of the cell modules 2, ..., a plurality of electric cells are electrically connected to each other and the plurality of electric cells constitute a large-capacity battery.

The packaging case 3 is provided with a tray 30 on which the cell modules 2, ... are arranged and a cover 31 that covers the upper part of the tray 30, more particularly, the modules 2, ... on the tray 30.

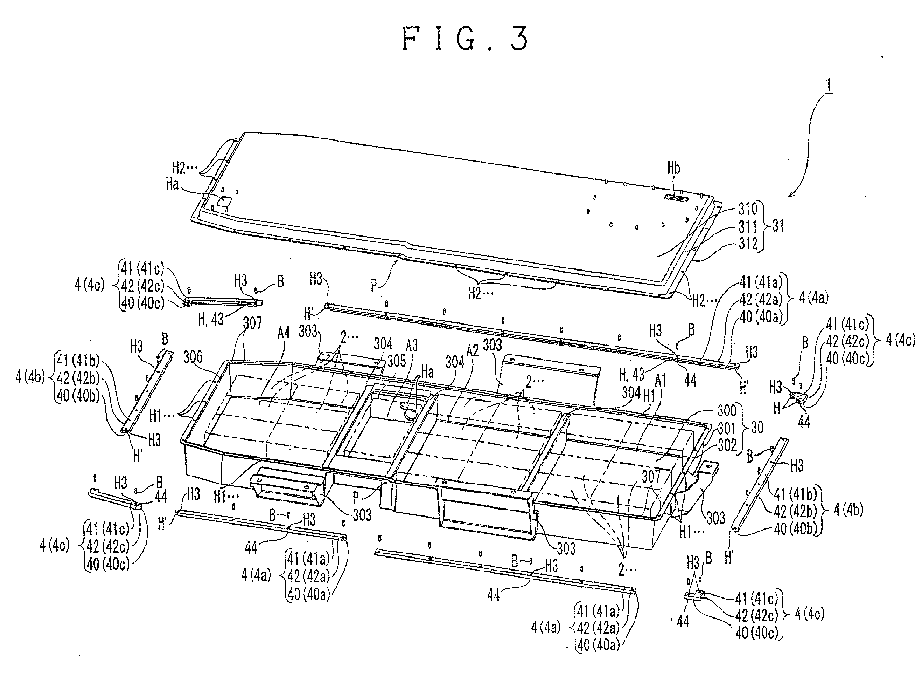

As shown in FIG. 3, the tray 30 is provided with a lower flange portion 302. That is, the tray 30 is provided with a bottom portion 300 on which the cell modules 2, ... are arranged (placed), and the above-described lower flange portion 302 that is directly or indirectly connected to the outer circumference of the bottom portion 300 and forms the shape of an annulus outside the bottom portion 300. More specifically, the tray 30 is provided with the above-described bottom portion 300, a lower circumferential wall portion 301 that rises from the outer circumference of the bottom portion 300, and the above-described lower flange portion 302 that extends outward from the upper end of the lower circumferential wall portion 301.

The bottom portion 300 is formed in a roughly rectangular shape in planar view. As a result of this, the lower circumferential wall portion 301 is formed in the shape of an angular frame in such a manner as to define the region that forms a rectangular shape in planar view in such a manner as to correspond to the planar shape of the bottom portion 300. Because the battery pack 1 is mounted on an electrically powered vehicle as described above, in each of a plurality of places on the outer surface of the lower circumferential wall portion 301 (in five places in this embodiment), a connecting arms 303, ... is placed in a protruding manner for connection to a chassis (not shown).

In the tray 30, a region enclosed by the lower circumferential wall portion 301 is partitioned into a plurality of (four in the drawings) regions A1, A2, A3, and A4 in the longitudinal direction of the bottom portion 300. That is, the tray 30 is provided with a plurality of partitions 304, ... that are spaced in the longitudinal direction of the bottom portion 300.

As described above, the lower circumferential wall portion 301 is formed in the shape of an angular frame in such a manner as to define the region that forms a rectangular shape in planar view. For this reason, each of the partitions 304, ... is connected to a pair of positions of the lower circumferential wall portion 301 that are opposed to each other (not numbered).

In the tray 30, controller 305 (a control board) that controls the charge and the like of the cell modules 2, ..., and others, are housed in the region A3, one of the regions A1, A2, A3, and A4 partitioned by the partitions 304, ..., and the plurality of cell modules 2, ... are arranged in the remaining regions A1, A2, and A4 in a matrix shape in planar view (in a condition in which a plurality of cell modules are arrayed lengthwise and crosswise in planar view).

In the tray 30, a connector (not shown) that connects a cable for supplying the power from the cell modules 2, ... to a driving motor and a control system of an electric vehicle and a connector (not shown) that connects a cable for signal transmission of information (a charge condition and the like) on the cell modules 2, ... and the electric cells, etc. are attached to the lower circumferential wall portion 301. For this reason, in the part of the lower circumferential wall portion 301 that defines the region A3 housing the controller 305, there is formed a connector through hole Ha through which a connector is attached (not shown).

The lower flange portion 302 extends outward from the whole circumference of the upper end of the lower circumferential wall portion 301. As a result of this, the lower flange portion 302 provides an endless annulus. Because the bottom portion 300 is formed in the shape of a quadrangle in planar view, the lower flange portion 302 provides a frame that is angular in planar view. In the lower flange portion 302, there are formed a plurality of screw insertion holes H1, ... through each of which a male screw member B is to be inserted. In the lower flange portion 302, a plurality of screw insertion holes H1 for insertion of the male screw member B are formed circumferentially at prescribed intervals.

As shown in FIGS. 4A and 4B, at least a part of the facing surface of the lower flange portion 302 that faces the opposite flange portion (an upper flange portion 312), which the lower flange portion 302 abuts, forms a non-abutting portion 306 that is located apart from the opposite flange portion (the upper flange portion 312). As described above, because in the lower flange portion 302, a plurality of screw insertion holes H1, ... are formed circumferentially at prescribed intervals, the non-abutting portion 306 is formed at a place nearer to the internal space than the screw insertion holes H1 in such a manner as to avoid the screw insertion holes H1, .... The non-abutting portion 306 is formed along the whole circumference of the lower flange portion 302 (see FIG. 3). The non-abutting portion 306 extends from a prescribed position, which is set to a place nearer to the internal space side housing the cell modules than the screw insertion holes H1 in a direction orthogonal to the circumferential direction of the lower flange portion 302, to an end close to the internal space. The non-abutting portion 306 is composed of an inclined surface that is inclined to be located apart from the opposite flange portion (the upper flange portion 312) toward the internal space in which the cell modules are housed.

Referring again to FIG. 3, the cover 31 is provided with the above-described upper flange portion 312. That is, the cover 31 is provided with a top portion 310 having a shape corresponding to the open part of the tray 30, and the above-described upper flange portion 312 that is connected directly or indirectly to the outer circumference of the top portion 310 and forms the shape of an annulus outside the top portion 310. More specifically, the cover 31 is provided with the above-described top portion 310, an upper circumferential wall portion 311 that suspends from the outer circumference of the top portion 310, and the above-described upper flange portion 312 that extends outward from the lower end of the upper circumferential wall portion 311.

The top portion 310 is formed in a roughly rectangular shape in planar view to correspond to the open part of the tray 30. As a result of this, the upper circumferential wall portion 311 is formed in the shape of a frame that defines the region of a roughly quadrangular shape in planar view.

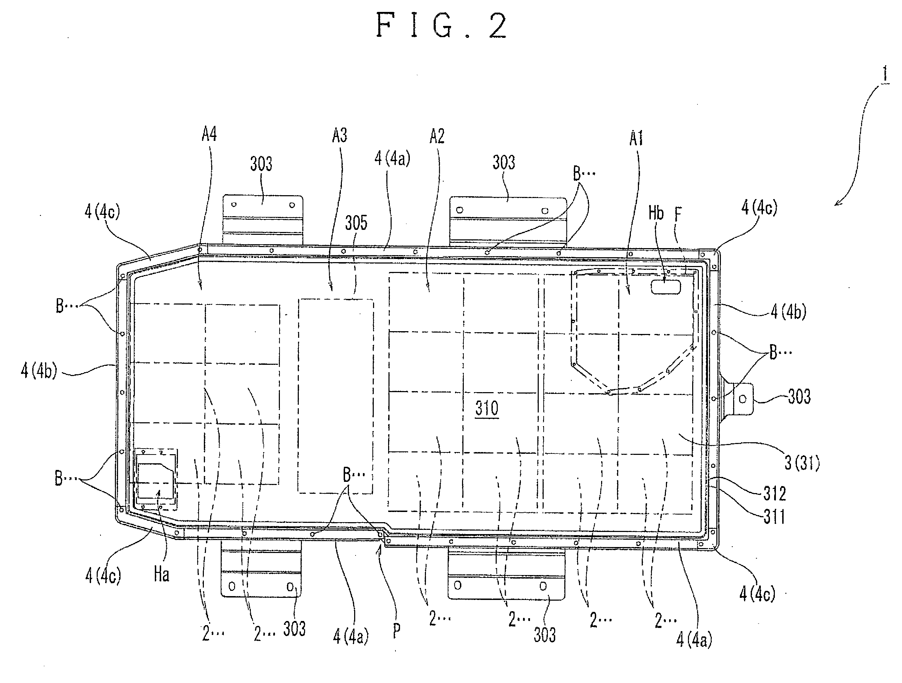

The battery pack 1 is provided with a cooling fan F for cooling, i.e., for releasing the heat generated by the charge and discharge of the cell modules 2, ... (cf., FIGS. 1 and 2).

The cooling fan F is mounted to the top portion 310. In association with this, an air intake opening Ha and an exhaust opening Hb are formed in the top portion 310 of the cover 31. Because the top portion 310 is formed in a rectangular shape as described above, the air intake opening Ha and the exhaust opening Hb are formed in diagonal positions on the top portion 310. In the battery pack 1, a suction blower is adopted as the cooling fan F. In association with this, in the cover 31, the cooling fan F is mounted in a position corresponding to the exhaust opening Hb.

The upper flange portion 312 extends outward from the whole circumference of the lower end of the upper circumferential wall portion 311. Therefore, as with the lower flange portion 302, the upper flange portion 312 provides an endless annulus. The upper flange portion 312 abuts the lower flange portion 302, with the cover 31 covering an upper opening of the tray 30.

In the upper flange portion 312, there are formed a plurality of screw insertion holes H2, ... through each of which a male screw member B is to be inserted. In the upper flange portion 312, a plurality of screw insertion holes H2, ... for insertion of the male screw member B are formed circumferentially at prescribed intervals. That is, in the upper flange portion 312, a plurality of screw insertion holes H2, ... are formed according to the arrangement of the screw insertion holes H1, ... of the lower flange portion 302 that abuts the upper flange portion 312. As a result of this, with the lower flange portion 302 and the upper flange portion 312 held in abutment with each other, the screw insertion holes H1, ... of the lower flange portion 302 and the screw insertion holes H2, ... of the upper flange portion 312 coincide with each other.

The whole surface of the facing surface of the upper flange portion 312 facing the lower flange portion 302 is a flat surface that is substantially uniform. As shown in FIGS. 4A and 4B, in the packaging case 3, with the lower flange portion 302 and the upper flange portion 312 held in abutment with each other, there is formed an expanded gap Es that expands toward an internal space and is open to the internal space between the lower flange portion 302 and the upper flange portion 312 (between the non-abutting portion 306 and a flat portion of the opposite flange portion). That is, the non-abutting portion 306 of the lower flange portion 302 is inclined to be located apart from the facing surface of the opposite flange portion (the upper flange portion 312) toward the internal space side where the cell modules 2, ... are housed, whereby the non-abutting portion 306 and the facing surface of the opposite flange portion (the upper flange portion 312) together form the expanded gap Es that expands toward the internal space and is open to the internal space.

The packaging case 3 is assembled by covering the tray 30 with the cover 31 after arranging a sealing member S on the non-abutting portion 306. As a result of this, in the packaging case 3, the expanded gap Es is filled with the sealing member S, with the tray 30 covered with the cover 31. Any sealing member that adheres tightly to the lower flange portion 302 and the upper flange portion 312 can be used as the sealing member S, and it is possible to adopt, for example, a liquid sealing agent having viscosity and a sealing material in the form of a sheet (in the form of tape).

In association with this, the packaging case 3 is provided with a blocking body 307 that blocks the open part of the above-described expanded gap Es. That is, the packaging case 3 is provided with the blocking body 307 for preventing the sealing member S filling the expanded gap Es from leaking from the open part of the expanded gap Es.

The blocking body 307 is placed along the whole inner circumference of the tray 30 or substantially along the whole inner circumference. Specifically, the blocking body 307 is formed in the shape of a strip plate and fixed to the inner circumferential surface of the lower circumferential wall portion 301 of the tray 30 in the condition in which the longitudinal direction of the blocking body 307 is aligned with the circumferential direction of the tray 30. The blocking body 307 is provided in such a manner that an end portion thereof in a direction orthogonal to the longitudinal direction (a lateral direction) is arranged so as to correspond to the open part of the expanded gap Es.

As a result of this, in the battery pack 1, an end (an end in the lateral direction) of the blocking body 307 of the tray 30 comes into contact with the cover 31 and blocks the open part of the expanded gap Es, with the tray 30 covered with the cover 31. As a result of this, the movement of the sealing member S is restricted by the blocking body 307 so that the sealing member S does not flow into the internal space from the open part of the expanded gap Es.

Referring again to FIGS. 1 to 3, the battery pack 1 is further provided with an edge cover 4 that covers from outside the whole surface or substantially the whole surface of the lower flange portion 302 and the upper flange portion 312 that abut each other.

The edge cover 4 is provided with a first section 40 facing the lower flange portion 302, a second section 41 facing the upper flange portion 312, and a connecting portion 42 that connects base ends of the first section 40 and the second section 41 together.

As shown in FIGS. 2 and 3, the edge cover 4 is made up of a plurality of separate pieces. That is, the edge cover 4 is made up of a plurality of separate pieces 4a, 4b, and 4c. The separate pieces 4a, 4b, and 4c are arranged in such a manner as to cover the lower flange portion 302 and the upper flange potion 312 that abut each other, whereby the separate pieces 4a, 4b, and 4c cover the whole circumference of the lower flange portion 302 and the upper flange potion 312 continuously in the circumferential direction.

More specifically, the edge cover 4 is provided with a plurality of separate pieces 4a, ... (hereinafter referred to as first separate pieces 4a, ...) for covering the long-side parts of the lower flange portion 302 and the upper flange potion 312 that abut each other, a plurality of separate pieces 4b, ... (hereinafter referred to as second separate pieces 4b, ...) for covering the short-side parts of the lower flange portion 302 and the upper flange potion 312 that abut each other, and a plurality of separate pieces 4c, ... (hereinafter referred to as third separate pieces 4c, ...) for covering the corner parts of the lower flange portion 302 and the upper flange potion 312 that abut each other. In the battery pack 1 of this embodiment, a stepped portion P is formed in a midway position of one long-side part of the lower flange portion 302 and the upper flange potion 312 that abut each other. For this reason, the first separate piece 4a covering the one long-side part of the lower flange portion 302 and the upper flange potion 312 that abut each other is divided into two parts, with the stepped part P serving as the boundary.

As shown in FIG. 3, each of the first separate pieces 4a, ... is provided with a first section 40a facing the lower flange portion 302, a second section 41a facing the upper flange potion 312, and a connecting portion 42a that connects the base ends of the first section 40a and the second section 41a together along the whole length. Each of the second separate pieces 4b, ... is provided with a first section 40b facing the lower flange portion 302, a second section 41b facing the upper flange potion 312, and a connecting portion 42b that connects the base ends of the first section 40b and the second section 41b together along the whole length. Each of the third separate pieces 4c, ... is provided with a first section 40c facing the lower flange portion 302, a second section 41c facing the upper flange potion 312, and a connecting portion 42c that connects the base ends of the first section 40c and the second section 41c together along the whole length.

The first section 40a and second section 41a of the first separate piece 4a and the first section 40b and second section 41b of the second separate piece 4b are each formed in the shape of a strip plate. Therefore, the connecting portion 42a of the first separate piece 4a connects an end (a base end) in a direction orthogonal to the longitudinal direction (lateral direction) of the first section 40a and an end (a base end) in a direction orthogonal to the longitudinal direction (lateral direction) of the second section 41a along the total length. The connecting portion 42b of the second separate piece 4b connects an end (a base end) in a direction orthogonal to the longitudinal direction (lateral direction) of the first section 40b and an end (a base end) in a direction orthogonal to the longitudinal direction (lateral direction) of the second section 41b along the total length.

In contrast to this, the first section 40c and second section 41c of the third separate piece 4c are formed in the shape of a hook (the shape of the letter L) in planar view. Therefore, the connecting portion 42c of the third separate piece 4c connects a widthwise end (base end) positioned on the outer side of the first section 40c and a widthwise end (base end) positioned on the outer side of the second section 41c along the total length. The third separate pieces 4c, ... are provided in quantities of four because they are arranged at four corners of the lower flange portion 302 and the upper flange portion 312. However, for two of the four third separate pieces 4c, 4c to be arranged on one-end side in the longitudinal direction of the bottom portion 300, one of the two sides of each of the first section 40c and the second section 41c, which form a hook shape, is formed to be longer than the other.

As described above, the base end of the first section 40 and the base end of the second section 41 are connected by the connecting portion 42, whereby the area between the base end of the first section 40 and the base end of the second section 41 is blocked by the connecting portion 42. Because the longitudinal sectional shape of the connecting portion 42 is a circular arc, the longitudinal section of the edge cover 4 has a roughly U-shape.

As shown in FIGS. 4A and 4B, the plurality of separate pieces 4a, 4b and 4c are arranged in such a manner that adjacent separate pieces come close to each other or are overlapped with each other when the separate pieces 4a, 4b, and 4c cover the whole circumference of the lower flange portion 302 and the upper flange portion 312 that abut each other. That is, in arranging the first separate pieces 4a, ..., the second separate pieces 4b, ..., and the third separate pieces 4c, ... around the packaging case 3, as shown in FIG. 4B, the separate pieces 4a, ... 4b, ... and 4c, ... are arranged so that the first sections 40c, ... and second sections 41c, ... of the third separate pieces 4c, ... cover from outside longitudinal end portions of each of the first sections 40a, ... and second sections 41a, ... of the first separate pieces 4a, ... and longitudinal end portions of each of the first sections 40b, ... and second sections 41b, ... of the second separate pieces 4b ....

The two of the first separate pieces 4a, 4a that cover one of the long-side portions of the lower flange portion 302 and the upper flange portion 312 that abut each other are arranged so that the longitudinal end portions of each of the first separate pieces 4a, 4a are close to each other (come into contact with each other) (cf., FIG. 2).

In this edge cover 4, as shown in FIGS. 4A and 4B, in one of the first section 40 and the second section 41, a plurality of female threaded portions 43, ... are formed in a spaced manner in the circumferential direction of the lower flange portion 302 and the upper flange portion 312, and in the residual one of the first section 40 and the second section 41, there are formed a plurality of screw insertion holes H3, ... for insertion of the above-described male screw member B according to the arrangement of the female threaded portions 43, .... These female threaded portions 43, ... and screw insertion holes H3, ... correspond to the arrangement of the screw insertion holes H1. and H2 formed in the lower flange portion 302 and the upper flange portion 312.

In this embodiment, because the edge cover 4 is made up of a plurality of pieces, the female threaded portions 43, ... are formed in the first section 40a of each of the first separate pieces 4a, ..., the first section 40b of each of the second separate pieces 4b, ..., and the first section 40c of each of the third separate pieces 4c, ..., and the screw insertion holes H3, ... are formed in the second section 41a of each of the first separate pieces 4a, ..., the second section 41b of each of the second separate pieces 4b, ..., and the second section 41c of each of the third separate pieces 4c, ....

As described above, in arranging the first separate pieces 4a, ..., the second separate pieces 4b, ..., and the third separate pieces 4c around the packaging case 3, the first section 40c and second section 41c of each of the third separate pieces 4c, ..., cover from outside longitudinal end portions of each of the first section 40a and second section 41a of the first separate piece 4a and longitudinal end portions of each of the first section 40b and second section 41b of the second separate piece 4b. For this reason, the end portions of the first separate piece 4a covered with the third separate piece 4c and the end portions of the second separate piece 4b covered with the third separate piece 4c are not provided with a female threaded portion 43, but merely provided with a through hole H' that is formed concentrically with the screw insertion hole H3 (cf., FIG. 3).

The female threaded portion 43 is composed of a threaded hole of a nut 44. That is, in the first section 40, the nuts 44, ... are fixed (welded) onto an outer surface located opposite to the surface facing the lower flange portion 302 and the threaded holes of the nuts 44, ... constitute the female threaded portions 43, .... In association with this, the first section 40 is provided with through holes H, ... corresponding to the threaded holes of the nuts 44, .... Since a typical nut is adopted as the nut 44 in this embodiment, the female threaded portion 43 is open at both ends thereof.

The battery pack 1 of the present embodiment is as described above. Next, the assembly of this battery pack 1 will be described.

First, as shown in FIG. 3, the cell modules 2, ... and the controller 305 are arranged on the tray 30. Next, the sealing member S is arranged on the non-abutting portion 306 of the lower flange portion 302. The upper open part of the tray 30, i.e., the cell modules 2, ... on the tray 30 are covered with the cover 31. More specifically, the sealing member S is placed in a groove having a triangular shape in section formed by the non-abutting portion 306 of the lower flange portion 302 and the blocking body 307, and after that, the tray 30 is covered with the cover 31.

Then, while the lower flange portion 302 and the upper flange portion 312 come in contact with each other in an area in the vicinity of the screw insertion holes H1 and H2 (a region where the non-abutting portion 306 of the lower flange portion 302 does not extend), the non-abutting portion 306 of the lower flange portion 302 is kept apart from the facing surface of the upper flange portion 312. Because of this, a hollow part having a triangular shape in section (a space that is made by blocking the open part of the expanded gap Es) is formed by the non-abutting portion (inclined surface) 306 of the lower flange portion 302, the blocking body 307 and the facing surface (flat part) of the upper flange portion 312, and the sealing member S arranged on the non-abutting portion 306 fills this hollow part.

Therefore, even when the load of the cover 31 covering the tray 30 acts on the lower flange portion 302 of the tray 30, the sealing member S necessary for the interface between the lower flange portion 302 of the tray 30 and the upper flange portion 312 of the cover 31 is present sufficiently, which means that the sealing performance between the tray 30 and the cover 31 is ensured.

As described above, after the tray 30 is covered with the cover 31, the edge cover 4 is attached to the lower flange portion 302 and the upper flange portion 312 that abut each other. That is, as shown in FIGS. 4A and 4B, the edge cover 4 is placed on the lower flange portion 302 and the upper flange portion 312 that abut each other so that the screw insertion hole H3 of the edge cover 4 coincides with the screw insertion holes H1 and H2 of the lower flange portion 302 and the upper flange portion 312. The male screw member B is inserted into the screw insertion holes H1, H2, and H3 formed in the second section 41, the lower flange portion 302, and the upper flange portion 312, and this male screw member B is screwed into the female threaded portion 43 formed in the first section 40.

As a result of this, the lower flange portion 302 and the upper flange portion 312 are held between the first section 40 and second section 41 of the edge cover 4 and fastened together while in contact with each other.

In this condition, the tightening force by the male screw members B, ... acts on the lower flange portion 302 and the upper flange portion 312. However, as described above, while the region of the facing surface facing the upper flange portion 312 where the non-abutting portion 306 does not extend comes into surface contact with the facing surface of the upper flange portion 312, the non-abutting portion 306 of the lower flange portion 302 is located apart from the facing surface of the upper flange portion 312. Because of this, even when the lower flange portion 302 and the upper flange portion 312 are strongly fastened by the male screw member B, the sealing member S is retained in the hollow part formed by the non-abutting portion 306 of the lower flange portion 302, the blocking body 307, and the facing surface of the upper flange portion 312.

As a result of this, even when not only the load of the cover 31 covering the tray 30, but also the tightening force by the male screw member B acts, the sealing member S necessary for the interface between the lower flange portion 302 of the tray 30 and the upper flange portion 312 of the cover 31 is present sufficiently. For this reason, the sealing performance between the tray 30 and the cover 31 is ensured.

The battery pack 1 is fixed to a car body (a chassis). The mounting of the cooling fan F, connectors, etc. and the connection of a wiring system are performed before the mounting of the battery pack 1 to the car body (the chassis) 1, and are performed before or after the tray 30 is covered with the cover 3.

As described above, in the battery pack 1, the facing surface of the lower flange portion 302 facing the upper flange portion 312 has the noun-abutting portion 306 that is located apart from the facing surface of the upper flange portion 312. For this reason, the non-abutting portion 306 does not come into pressure contact with the facing surface of the opposite flange portion.

As a result of this, with the lower flange portion 302 and the upper flange portion 312 held in abutment with each other, the sealing member S arranged on the non-abutting portion 306 of the lower flange portion 302 is not unnecessarily pressurized by the lower flange portion 302 and the upper flange portion 312. Therefore, the sealing member S is not pushed out to the inside or the outside, with the tray 30 covered with the cover 31. For this reason, it is possible to allow the necessary sealing member S to be interposed between the lower flange portion 302 and the upper flange portion 312, and this enables the sealing performance between the lower flange portion 302 and the upper flange portion 312 to be obtained.

Therefore, even when the cleaning water during car washing and the water splashed by cars during driving adhere to the bottom portion of a vehicle, liquids such as water do not enter the internal space housing the cell modules 2, ... and it is possible to reliably prevent the occurrence of accidents such as electric shocks and leaks.

In particular, the non-abutting portion 306 is inclined to be located apart from the facing surface of the opposite flange portion toward an internal space in which the cell modules 2 are housed, ..., whereby the expanded gap Es that expands toward the internal space and is open to the internal space is formed. The tray 30 is provided with the blocking body 307 that blocks the open part of the expanded gap Es. For this reason, the fastening of the lower flange portion 302 to the upper flange portion 312 by the male screw member B is reliably performed, and it is possible to ensure the sealing performance between the two flange portions 302 and 312.

If the expanded gap Es is open on the internal space side, in the case where the sealing member S in the expanded gap Es is softened by the surrounding environment (temperature, humidity and the like), it is possible that this sealing member S drops down from the open part to the internal space side. However, in the battery pack 1 of this embodiment, the open part of the expanded gap Es is blocked by the blocking body 307 and hence the sealing member S in the expanded gap Es is prevented from leaking (dropping) to the internal space. Therefore, even the sealing member S is softened under the influence of the surrounding environment (temperature, humidity and the like) to produce flowability, the sealing member S is maintained in the expanded gap Es. For this reason, it is possible to reliably seal the interface between the tray 30 and the cover 31.

The battery pack 1 is further provided with the edge cover 4 that covers from outside the whole circumference or substantially the whole circumference of the lower flange portion 302 and the upper flange portion 312 that abut each other. For this reason, even when liquids such as water and cleaning liquid adhere to the packaging case 3, it is possible to reduce opportunities for the liquid to reach the interface between the lower flange portion 302 and the upper flange portion 312. That is, as shown in FIGS. 5A and 5B, the provision of the edge cover 4 in the battery pack 1 enables the edge cover 4 to cut off a liquid spattering to the vicinity of the lower flange portion 302 and the upper flange portion 312. For this reason, it is possible to reduce opportunities for a liquid to reach the interface between the lower flange portion 302 and the upper flange portion 312.

In particular, the edge cover 4 is provided with the first section 40 facing the lower flange portion 302, the second section 41 facing the upper flange portion 312, and the connecting portion 42 that connects the base ends of the first section 40 and the second section 41 together; the plurality of female threaded portions 43, ... are formed in the first section 40 and the screw insertion holes H1, H2 and H3 for insertion of the male screw members B, ... are formed in the lower flange portion 302, the upper flange portion 312, and the second section 41 according to the arrangement of the female threaded portions 43, .... For this reason, it is possible to attach the cover 31 to the tray 30 simply by inserting each male screw member B into the screw insertion holes H1, H2 and H3 and screwing the male screw member B through each female threaded portion 43 with no need for arranging a large number of nuts in a plurality of places. Even when male screw members B, ... are removed, the female threaded portions 43, ... into which the male screw members B, ... have been screwed remain integral with the edge cover 4. For this reason, it is unnecessary to perform complicated work of recovering a large number of nuts.

In the first section 40 of the edge cover 4, the nut 44 is fixed onto an outer surface on the side opposite to a surface facing the lower flange portion 302 and the threaded hole of this nut 44 constitutes the female threaded portion 43. For this reason, it is possible to ensure the screwing of the male screw member B on the nut 44 (the female threaded portion 43) and even when the tightening force in the direction of axis line by the male screw member B is increased, it is possible to sufficiently withstand this tightening force. By increasing the tightening force in the direction of axis line like this, it is possible to increase the holding force of the first section 40 and second section 42 of the edge cover 4 acting on the lower flange portion 302 and the upper flange portion 312. For this reason, it is possible to increase the degree of contact between the lower flange portion 302 and the upper flange portion 312 while increasing the degree of adherence of the sealing member S to the lower flange portion 302 and the upper flange portion 312, and it is possible to further increase the sealing performance between the flange portions.

The battery pack of the present invention is not limited to the above-described embodiment and can be appropriately changed so long as the changes do not deviate from the gist of the present invention.

That is, although in the above-described embodiment the description was given of the battery pack 1 mounted on an electric vehicle (EV), the present invention is not limited to this. The battery pack of the present invention may also be a battery pack to be mounted on a hybrid electric vehicle (HEV). In other words, all that is needed is that the battery pack of the present invention is adopted as the power source (energy source) of an electrically powered vehicle that is driven by electric energy.

In the above-described embodiment, the description was given of the battery pack 1 in which the packaging case 3 houses a plurality of cell modules 2, ..., each of which is formed of a plurality of electric cells. However, the present invention is not limited to this configuration. For example, electric cells that are not packaged may be housed in the packaging case 3. In other words, the present invention can be applied to a battery pack in which one or more electric cells are housed in a packaging case 3.

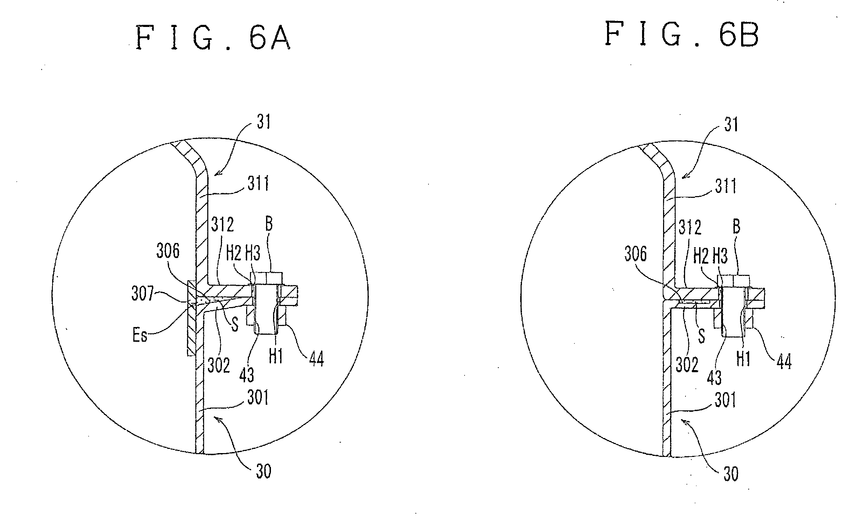

Although in the above-described embodiment the edge cover 4 is provided, the present invention is not limited to this configuration. For example, as shown in FIGS. 6A and 6B, it is possible to adopt the configuration in which the edge cover 4 is not provided and the lower flange portion 302 and the upper flange portion 312 that abut each other are exposed to the outside. Because even in this case the necessary sealing member S is interposed between the lower flange portion 302 and the upper flange portion 312, it is possible to reliably seal the interface between the lower flange portion 302 and the upper flange portion 312. However, in order to further increase the liquid-tightness to the internal space, it is preferred that the edge cover 4 be provided.

According to the prior art as shown in FIG. 6B, it is possible to adopt a configuration in which a concavity is formed in part of the lower flange portion, the far side surface of the concavity serves as the non-abutting portion 306, and the sealing member S is arranged on the non-abutting portion 306. Even in this case, the non-abutting portion 306 does not come into pressure contact with the facing surface of the opposite flange portion, with the lower flange portion 302 and the upper flange portion 312 held in abutment with each other.

Therefore, with the lower flange portion 302 and the upper flange portion 312 held in abutment with each other, the sealing member S arranged on the non-abutting portion 306 of the lower flange portion 302 is not unnecessarily pressurized by the lower flange portion 302 and the upper flange portion 312. For this reason, the sealing member S is not pushed out to the inside and outside, with the tray 30 covered with the cover 31. As a result of this, it is possible to allow the necessary sealing member S to be interposed between the lower flange portion 302 and the upper flange portion 312, and this enables the sealing performance between the lower flange portion 302 and the upper flange portion 312 to be obtained.

Although in the above-described embodiment the blocking body 307 that blocks the open part of the expanded gap Es is placed in the tray 30, the present invention is not limited to this configuration. The blocking body 307 may also be provided in the cover 31. Alternatively it is possible to adopt the configuration in which the blocking body 307 is provided in both the tray 30 and the cover 31, and the two blocking bodies 307 block the open part of the expanded gap Es in cooperation with each other.

Also it is possible to adopt the configuration in which the blocking body 307 is not provided and the open part of the expanded gap Es is kept open. Even in this case, the sealing member S is not pushed out to the inside and outside, with the lower flange portion 302 and the upper flange portion 312 held in abutment with each other, and it is possible to obtain the sealing performance between the lower flange portion 302 and the upper flange portion 312. However, in consideration of the possibility that the sealing member softens due to long time use and under the influence of the surrounding environment, it is preferred that the open part of the expanded gap Es be blocked.

Although in the above-described embodiment the facing surface of the upper flange portion 312 is a flat surface that is substantially smooth and the non-abutting portion 306 is formed in the lower flange portion 302 (the tray 30), the present invention is not limited to this configuration. For example, it is possible to adopt the configuration in which the facing surface of the lower flange portion 302 is a flat surface that is substantially smooth and the non-abutting portion 306 is formed in the upper flange portion 312 (the cover 31). It is also possible to adopt the configuration in which for both the lower flange portion 302 and the upper flange portion 312, there is provided the non-abutting portion 306 that is located apart from the facing surface of the opposite facing surface (the opposite non-abutting portion 306). That is, all that is needed is that the non-abutting portion 306 is formed in at least part of at least one of a pair of facing surfaces of the lower flange portion 302 and the upper flange portion 312 that face each other. Even in this case, the sealing member S arranged on the non-abutting portion 306 is not pushed out to the inside and outside by being held between the lower flange portion 302 and the upper flange portion 312 that abut each other, and it is possible to obtain necessary and sufficient sealing performance.

Although in the above-described embodiment the edge cover 4 is made up of the first separate pieces 4a, ..., the second separate pieces 4b, ..., and the third separate pieces 4c, ... , the present invention is not limited to this configuration. The edge cover 4 may be made up of two separate pieces each provided with the first section 40, the second section 41, and the connecting portion 42. Alternatively the edge cover 4 may be made up of a single piece provided with the first section 40, the second section 41, and the connecting portion 42.

However, because it is necessary that the edge cover 4 cover the whole circumference of the lower flange portion 302 and the upper flange portion 312, in the case of the configuration in which an edge cover with a single piece is used, it is necessary to divide the single-piece edge cover at a given position. In this case, it is preferred that flexibility be given to the edge cover 4 in a position different from the position where the edge cover 4 is divided or that a hinge structure be provided in a position different from the position where the edge cover 4 is divided. By doing this, it is possible to widen the spacing of both ends of the edge cover 4, with the portion to which flexibility is given or the hinge structure serving as a supporting point. For this reason, it is possible to easily arrange the edge cover 4 along the whole circumference of the lower flange portion 302 and the upper flange portion 312.

Although in the above-described embodiment the female threaded portions 43, ... are formed in the first section 40 of the edge cover 4 and the screw insertion holes H3, ... are formed in the second section 41 of the edge cover 4, the present invention is not limited to this configuration. For example, it is possible to adopt the configuration in which the screw insertion holes H3, ... are formed in the first section 40 of the edge cover 4 and the female threaded portions 43, ... are formed in the second section 41 of the edge cover 4.

Although in the above-described embodiment the nuts 44, ... are fixed (welded) to the first section 40 and the threaded holes of the nuts 44, ... form the female threaded portions 43, ..., the present invention is not limited to this configuration. For example, threaded holes (tap holes) may be formed directly in the first section 40. The same applies also to the case where the female threaded portions 43, ... are formed in the second section 41.

Although in the above-described embodiment the description was given of the packaging case 3 in which the bottom portion 300 of the tray 30 has a rectangular shape and the top portion 310 of the cover 31 has a rectangular shape in such a manner as to correspond to this, the present invention is not limited to this configuration. For example, it is possible to adopt the configuration in which the bottom portion 300 of the tray 30 has a square shape and also the top portion 310 of the cover 31 has a square shape in such a manner as to correspond to this. Furthermore, the present invention is not limited to the configurations in which the bottom portion 300 of the tray 30 and the top portion 310 of the cover 31 form angular shapes such as a rectangular and a square shape, and the bottom portion 300 and the top portion 310 may have non-rectangular shapes.

Although in the above-described embodiment the internal space of the packaging case 3 is partitioned, the present invention is not limited to this configuration. It is also possible to adopt the configuration in which the internal space of the packaging case 3 is not partitioned. Furthermore, the present invention is not limited to the configuration in which the controller 305 is arranged in the packaging case 3, and it is possible to adopt the configuration in which only the cell modules 2, ... are arranged in the packaging case 3 and the controller 305 and others are arranged in another case.

Although in the above-described embodiment the description was given of the packaging case 3 that is composed of the tray 30 in which the lower flange portion 302 is provided in a coupled manner at the upper end of the lower circumferential wall portion 301 rising from the outer circumference of the bottom portion 300, and the cover 31 in which the upper flange portion 312 is provided in a coupled manner at the lower end of the upper circumferential wall portion 311 suspending from the outer circumference of the top portion 310, the packaging case 3 is not limited to this. For example, it is possible to adopt a cover 31 forming a plate shape as a whole in which the upper flange portion 312 is provided in a coupled manner directly on the outer circumference of the top portion 310 on the precondition that the tray 30 is of the same configuration as in the above-described embodiment. Alternatively it is possible to adopt a tray 30 forming a plate shape as a whole in which the lower flange portion 302 is provided in a coupled manner directly on the outer circumference of the bottom portion 300 on the precondition that the cover 31 is of the same configuration as in the above-described embodiment.

That is, all that is needed is that the space housing the cell modules 2, ... is formed in at least one of the tray 30 and the cover 31. Even by doing this, the non-abutting portion 306 is formed in at least one of the lower flange portion 302 and the upper flange portion 312 that abut each other, and the sealing member S is arranged on the non-abutting portion 306, whereby the same operation and effect as in the above-described embodiment can be ensured.

Although in the above-described embodiment the female threaded portions 43, ... are open at both ends thereof, the present invention is not limited to this configuration. For example, the female threaded portions 43, ... may be closed at one ends thereof located on the opposite side to the surface facing the lower flange portion 302 in the first section 40. Specifically, in the case where the nuts 44, ... are fixed to the first section 40 and the threaded holes of the nuts 44, .. form the female threaded portions 43, cap nuts are adopted as the nuts 44, .... Alternatively, in the case where the female threaded portion 43 is formed directly in the first section 40, non-through holes are formed in the first section 40 and female threads are formed on the inner circumference (tapping). The same applies also to the case where the female threaded portion 43 is provided in the second section 41 in place of the first section 40.

By doing this, it is possible to prevent a liquid from entering the interface between the female threaded portion 43 and the male screw member B (between the threads) from the side opposite to the opening from which the male screw member B is inserted and engaged with the female threaded portion 43. That is, because the female threaded portion 43 is closed at the outside, it is possible to reliably prevent a liquid adhering to the vicinity of the female threaded portion 43 in one of the first section 40 and the second section 41 from entering the female threaded portion 43. As a result of this, it is possible to more reliably seal the interface between lower flange portion 302 and the upper flange portion 312.

Although in the above-described embodiment the description was given of the battery pack 1 mounted to the bottom portion of an electrically powered vehicle, the present invention is not limited to this configuration. For example, the present invention may be applied also to a battery pack 1 that can be mounted or is mounted to portions other than the bottom portion of an electrically powered vehicle to which liquids such as rainwater and cleaning water may adhere. The shape and arrangement of the connecting arm 303 can be appropriately changed as necessary depending on the type of the electrically powered vehicles.

Although in the above-described embodiment the plurality of female threaded portions 43, ... are arranged in the edge cover 4 in a line circumferentially at prescribed intervals, the present invention is not limited to this configuration. For example, a plurality of female threaded portions 43, ... may be arranged in a plurality of lines in a direction orthogonal to the circumferential direction. In this case, a plurality of screw insertion holes H1, H2, and. H3 are formed in the lower flange portion 302, the upper flange portion 312, and the second section 41 in such a manner as to correspond to the arrangement of the female threaded portions 43, ....

## Claims

1. A battery pack comprising:
one or more electric cells; and
a packaging case (3) that houses the one or more electric cells;
the packaging case (3) including:
a tray (30) on which the electric cells are arranged, the tray (30) having a lower flange portion (302); and
a cover (31) that covers the electric cells on the tray (30), the cover (31) having an upper flange portion (312); wherein
the lower flange portion (302) and the upper flange portion (312) have facing surfaces respectively, through which the lower and upper flange portions (302, 312) abut each other with the electric cells on the tray (30) covered with the cover (31); and
at least a part of the facing surface of at least one of the lower flange portion (302) and the upper flange portion (312) forms a non-abutting portion (306), the non-abutting portion (306) being located apart from the facing surface of the opposite flange portion (302 or 312) with the lower flange portion (302) and the upper flange portion (312) abutting each other;
the battery pack (1) further comprising a sealing member (S) arranged on the non-abutting portion (306);
**characterized in that** the non-abutting portion (306) is inclined to be located apart from the facing surface of the opposite flange portion (302 or 312) toward an internal space of the packaging case (3) in which the electric cells are housed; and
the non-abutting portion (306) and the facing surface of the opposite flange portion (302 or 312) together form an expanded gap (Es) that expands toward the internal space and is open to the internal space.

2. The battery pack according to claim 1, wherein at least one of the tray (30) and the cover (31) includes a blocking body (307) that blocks an opening of the expanded gap (Es).

3. The battery pack according to claim 2, wherein the expanded gap (Es) has a triangular shape in section defined by the non-abutting portion (306), the surface of the opposite flange portion (302, 312) and the blocking body (307).

4. The battery pack according to claim 2 or 3, wherein the sealing member (S) is arranged to fill the expanded gap (Es).

5. battery pack according to any one of claims 1 to 4, further comprising an edge cover (4) that covers from outside the whole circumference or substantially the whole circumference of the lower flange portion (302) and the upper flange portion (312) that abut each other.

6. The battery pack according to claim 5, wherein the edge cover (4) comprises:
a first section (40) facing the lower flange portion (302);
a second section (41) facing the upper flange portion (312); and
a connecting portion (42) that connects base ends of the first section (40) and the second section (41) together, wherein
one of the first section (40) and the second section (41) has a plurality of female threaded portions (43, ...); and
the residual one of the first section (40) and the second section (41), the lower flange portion (302), and the upper flange portion (312) have screw insertion holes (H1, H2, H3, ...) arranged corresponding to the arrangement of the female threaded portions (43, ...), through which male screw members are inserted.

7. The battery pack according to claim 6, wherein nuts (44, ...) are fixed onto an outer surface of one of the first section (40) and the second section (41), the outer surface being located opposite to a surface facing one of the lower flange portion (302) and the upper flange portion (312), the nuts (44, ...) have threaded holes, and the threaded holes constitute the female threaded portions (43, ...).

8. The battery pack according to claim 6 or 7, wherein the plurality of female threaded portions (43, ...) of one of the first section (40) and the second section (41) are closed at one ends thereof located on the opposite side to a surface facing one of the lower flange portion (302) and the upper flange portion (312).

9. The battery pack according to any one of claims 6 to 8, wherein the non-abutting portion (306) is formed at a place nearer to the internal space than the screw insertion holes (H1, H2, ...) in such a manner as to avoid the screw insertion holes (H1, H2, ...).

10. The battery pack according to any one of claims 1 to 9, wherein the packaging case (3) is configured to be capable of being mounted to a bottom portion of an electrically powered vehicle or is mounted thereto.

11. The battery pack according to any one of claims 1 to 10, wherein the lower flange portion (302) and the upper flange portion (312) form the shape of an endless annulus respectively; and
the non-abutting portion (306) is formed along the whole circumference of the at least one of the lower flange portion (302) and the upper flange portion (312).

12. An electrically powered vehicle provided with the battery pack (1) according to any one of claims 1 to 11.

## Patentansprüche

1. Batteriepack, der aufweist:
eine oder mehrere elektrische Zellen; und
ein Packungsgehäuse (3), in dem die eine oder die mehreren elektrischen Zellen untergebracht sind;
wobei das Packungsgehäuse (3) aufweist:
einen Trog (30), auf dem die elektrischen Zellen angeordnet sind, wobei der Trog (30) einen unteren Flanschabschnitt (302) hat; und
einen Deckel (31), der die elektrischen Zellen auf dem Trog (30) abdeckt,
wobei der Deckel (31) einen oberen Flanschabschnitt (312) hat; wobei der untere Flanschabschnitt (302) und der obere Flanschabschnitt (312) jeweils Gegenflächen haben, über die der obere und untere Flanschabschnitt (302, 312) aneinander anliegen, wobei die elektrischen Zellen auf dem Trog (30) mit dem Deckel (31) abgedeckt sind; und
mindestens ein Teil der Gegenfläche des unteren Flanschabschnitts (302) und/oder des oberen Flanschabschnitts (312) einen nicht anliegenden Abschnitt (306) bildet, wobei der nicht anliegende Abschnitt (306) von der Gegenfläche des entgegengesetzten Flanschabschnitts (302 oder 312) getrennt liegt, wobei der untere Flanschabschnitt (302) und der obere Flanschabschnitt (312) aneinander anliegen;
wobei der Batteriepack (1) ferner ein Dichtungsbauteil (S) aufweist, das auf dem nicht anliegenden Abschnitt (306) angeordnet ist;
**dadurch gekennzeichnet, dass** der nicht anliegende Abschnitt (306) so geneigt ist,
dass er von der Gegenfläche des entgegengesetzten Flanschabschnitts (302 oder 312) zu einem Innenraum des Packungsgehäuses (3) getrennt liegt, in dem die elektrischen Zellen untergebracht sind; und
der nicht anliegende Abschnitt (306) und die Gegenfläche des entgegengesetzten Flanschabschnitts (302 oder 312) gemeinsam einen aufgeweiteten Spalt (Es) bilden, der sich zum Innenraum aufweitet und zum Innenraum offen ist.

2. Batteriepack nach Anspruch 1, wobei der Trog (30) und/oder der Deckel (31) einen Sperrkörper (307) aufweist, der eine Öffnung des aufgeweiteten Spalts (Es) versperrt.

3. Batteriepack nach Anspruch 2, wobei der aufgeweitete Spalt (Es) im Schnitt eine Dreieckform hat, die durch den nicht anliegenden Abschnitt (306), die Oberfläche des entgegengesetzten Flanschabschnitts (302, 312) und den Sperrkörper (307) festgelegt ist.

4. Batteriepack nach Anspruch 2 oder 3, wobei das Dichtungsbauteil (S) so angeordnet ist, dass es den aufgeweiteten Spalt (Es) füllt.

5. Batteriepack nach einem der Ansprüche 1 bis 4, ferner mit einer Kantenabdeckung (4), die von außen den gesamten Umfang oder im Wesentlichen den gesamten Umfang des unteren Flanschabschnitts (302) und des oberen Flanschabschnitts (312) abdeckt, die aneinander anliegen.

6. Batteriepack nach Anspruch 5, wobei die Kantenabdeckung (4) aufweist:
ein erstes Teilstück (40), das zum unteren Flanschabschnitt (302) weist;
ein zweites Teilstück (41), das zum oberen Flanschabschnitt (312) weist; und
einen Verbindungsabschnitt (42), der Basisenden des ersten Teilstücks (40) und des zweiten Teilstücks (41) miteinander verbindet, wobei
das erste Teilstück (40) oder das zweite Teilstück (41) mehrere Innengewindeabschnitte (43, ...) hat; und
das andere des ersten Teilstücks (40) und zweiten Teilstücks (41), der untere Flanschabschnitt (302) und der obere Flanschabschnitt (312) Einschraublöcher (H1, H2, H3, ...) haben, die in Entsprechung zur Anordnung der Innengewindeabschnitte (43, ...) angeordnet sind, durch die Außengewinde-Schraubbauteile eingesetzt sind.

7. Batteriepack nach Anspruch 6, wobei Muttern (44, ...) auf einer Außenfläche des ersten Teilstücks (40) oder des zweiten Teilstücks (41) befestigt sind, wobei die Außenfläche entgegengesetzt zu einer Oberfläche liegt, die zum unteren Flanschabschnitt (302) oder zum oberen Flanschabschnitt (312) weist, die Muttern (44, ...) Gewindelöcher haben und die Gewindelöcher die Innengewindeabschnitte (43, ...) bilden.

8. Batteriepack nach Anspruch 6 oder 7, wobei die mehreren Innengewindeabschnitte (43, ...) des ersten Teilstücks (40) oder des zweiten Teilstücks (41) an den Enden davon geschlossen sind, die auf der entgegengesetzten Seite zu einer Oberfläche liegen, die zum unteren Flanschabschnitt (302) oder zum oberen Flanschabschnitt (312) weist.

9. Batteriepack nach einem der Ansprüche 6 bis 8, wobei der nicht anliegende Abschnitt (306) an einer Stelle näher zum Innenraum als die Einschraublöcher (H1, H2, ...) so gebildet ist, dass er die Einschraublöcher (H1, H2, ...) meidet.

10. Batteriepack nach einem der Ansprüche 1 bis 9, wobei das Packungsgehäuse (3) so konfiguriert ist, dass es an einem Bodenabschnitt eines Elektrofahrzeugs angeordnet werden kann oder daran angeordnet ist.

11. Batteriepack nach einem der Ansprüche 1 bis 10, wobei der untere Flanschabschnitt (302) und der obere Flanschabschnitt (312) jeweils die Form eines Endlosrings bilden; und
der nicht anliegende Abschnitt (306) am gesamten Umfang des unteren Flanschabschnitts (302) und/oder des oberen Flanschabschnitts (312) entlang ausgebildet ist.

12. Elektrofahrzeug, das mit dem Batteriepack (1) nach einem der Ansprüche 1 bis 11 versehen ist.

## Revendications

1. Bloc batterie, comprenant :
une ou plusieurs cellules électriques ; et
un boîtier de conditionnement (3) renfermant la ou les cellules électriques ; ledit boîtier de conditionnement (3) comportant :
un plateau (30) sur lequel sont disposées les cellules électriques, ledit plateau (30) présentant une partie de bride inférieure (302) ; et
un couvercle (31) qui recouvre les cellules électriques sur le plateau (30), ledit couvercle (31) présentant une partie de bride supérieure (312) ; où
la partie de bride inférieure (302) et la partie de bride supérieure (312) ont des surfaces opposées l'une à l'autre, par lesquelles la partie de bride inférieure et la partie de bride supérieure (302, 312) butent l'une contre l'autre, les cellules électriques sur le plateau (30) étant recouvertes par le couvercle (31) ; et
au moins une partie de la surface opposée d'au moins soit la partie de bride inférieure (302), soit la partie de bride supérieure (312) formant une partie non affleurante (306), ladite partie non affleurante (306) étant espacée de la surface opposée de l'autre partie de bride (302 ou 312), la partie de bride inférieure (302) et la partie de bride supérieure (312) butant l'une contre l'autre ;
ledit bloc batterie (1) comprenant en outre un élément d'étanchéité (S) disposé sur la partie non affleurante (306) ;
**caractérisé en ce que** pour être espacée de la surface opposée de l'autre partie de bride (302 ou 312), la partie non affleurante (306) est inclinée vers un espace intérieur du boîtier de conditionnement (3) où les cellules électriques sont logées ; et
la partie non affleurante (306) et la surface opposée de l'autre partie de bride (302 ou 312) forment ensemble une fente élargie (Es) qui s'élargit vers l'espace intérieur et est ouverte sur l'espace intérieur.

2. Bloc batterie selon la revendication 1, où au moins soit le plateau (30), soit le couvercle (31) comprend un corps de fermeture (307) fermant une ouverture de la fente élargie (Es).

3. Bloc batterie selon la revendication 2, où la fente élargie (Es) a une section de forme triangulaire définie par la partie non affleurante (306), la surface de l'autre partie de bride (302, 312) et le corps de fermeture (307).

4. Bloc batterie selon la revendication 2 ou la revendication 3, où l'élément d'étanchéité (S) est disposé pour combler la fente élargie (Es).

5. Bloc batterie selon l'une des revendications 1 à 4, comprenant en outre un couvercle périphérique (4) qui recouvre de l'extérieur toute la circonférence ou sensiblement toute la circonférence de la partie de bride inférieure (302) et de la partie de bride supérieure (312) qui butent l'une contre l'autre.

6. Bloc batterie selon la revendication 5, où le couvercle périphérique (4) comprend :
une première section (40) opposée à la partie de bride inférieure (302) ;
une deuxième section (41) opposée à la partie de bride supérieure (312) ; et
une partie de connexion (42) qui relie les extrémités de base de la première section (40) et de la deuxième section (41),
soit la première section (40), soit la deuxième section (41) présentant une pluralité de parties à filet femelle (43, ...) ; et
la section restante entre la première section (40) et la deuxième section (41), la partie de bride inférieure (302), et la partie de bride supérieure (312) présentant des trous d'insertion de vis (H1, H2, H3, ...) dont la disposition correspond à la disposition des parties à filet femelle (43, ...) dans lesquelles des éléments à filet mâle sont insérés.

7. Bloc batterie selon la revendication 6, où des rainures (44, ...) sont ménagées sur une surface extérieure soit de la première section (40), soit de la deuxième section (41), ladite surface extérieure étant opposée à une surface opposée soit à la partie de bride inférieure (302), soit à la partie de bride supérieure (312), les rainures (44, ...) présentant des trous filetés, et lesdits trous filetés constituent les parties à filet femelle (43, ...).

8. Bloc batterie selon la revendication 6 ou la revendication 7, où les plusieurs parties à filet femelle (43, ...) soit de la première section (40), soit de la deuxième section (41), sont fermées à de premières extrémités situées sur le côté opposé à une surface opposée soit à la partie de bride inférieure (302), soit à la partie de bride supérieure (312).

9. Bloc batterie selon l'une des revendications 6 à 8, où la partie non affleurante (306) est formée à un emplacement plus rapproché de l'espace intérieur que les trous d'insertion de vis (H1, H2, ...), de manière à éviter les trous d'insertion de vis (H1, H2, ...).

10. Bloc batterie selon l'une des revendications 1 à 9, où le boîtier de conditionnement (3) est prévu pour pouvoir être monté sur une partie de plancher d'un véhicule électrique, ou est monté sur celle-ci.

11. Bloc batterie selon l'une des revendications 1 à 10, où la partie de bride inférieure (302) et la partie de bride supérieure (312) ont chacune la forme d'un anneau sans fin ; et
où la partie non affleurante (306) est formée sur toute la circonférence d'au moins soit la partie de bride inférieure (302), soit la partie de bride supérieure (312).

12. Véhicule électrique, prévu avec un bloc batterie (1) selon l'une des revendications 1 à 11.
